# EUROPÄISCHE PATENTANMELDUNG

(11) **EP 1 747 876 A2**
(43) Veröffentlichungstag der Anmeldung: **31.01.2007**
(21) Anmeldenummer: 06114437.4
(22) Anmeldetag: 23.05.2006
(51) Int. Cl.: B29C 65/18, B29C 65/30, B65B 51/10

(54) **Heißsiegelwerkzeug**

(30) Priorität: 25.07.2005 DE 102005035567
(71) Anmelder: Bizerba GmbH & Co. KG, D-72336 Balingen (DE)
(72) Erfinder: König, Winfried, 72336 Balingen (DE); Wersching, Claudius, 72336 Balingen (DE)
(74) Vertreter: Hoeger, Stellrecht & Partner Patentanwälte

(57) **Zusammenfassung**

Es wird ein Heißsiegelwerkzeug vorgeschlagen, umfassend eine Wärmeübertragungseinrichtung (22) zur Kontaktierung von Siegelobjekten (50), wobei die Wärmeübertragungseinrichtung (22) aus einem metallischen Material hergestellt ist, und einen Träger (20), an welchem die Wärmeübertragungseinrichtung (22) gehalten ist, wobei die Wärmeübertragungseinrichtung (22) über Stegelemente (26) an dem Träger (20) fixiert ist und die Stegelemente (26) einstückig an der Wärmeübertragungseinrichtung (22) angeordnet sind.

## Beschreibung

Die Erfindung betrifft ein Heißsiegelwerkzeug.

Solche Heißsiegelwerkzeuge werden beispielsweise in Verpackungsmaschinen eingesetzt, um Folienbahnen miteinander zu verschweißen und dadurch einen versiegelten Aufnahmeraum für Verpackungsgut bereitzustellen.

Aus der DE 34 43 914 ist eine Maschine zum Herstellen von Kunststoffbeuteln mit einer zum Bilden von Schweißnähten in einer mindestens zweilagigen thermoplastischen Folie dienenden, beheizbaren Schweißleiste bekannt. Die Schweißleiste weist eine Schweißkante auf und ist mit einem Tragkörper verbunden, der sich im Wesentlichen über die ganze Länge der Schweißleiste erstreckt und mit mehreren in einer längs der Schweißleiste verlaufenden Reihe in Abständen voneinander angeordneten Haltern versehen ist, an denen die Schweißleiste festgelegt und die als Führung für eine in einer Verschiebeebene verlaufende Verschiebebewegung der Schweißleiste ausgebildet sind. Die Schweißleiste ist durch in der Verschiebeebene wirkende Kräfte in dieser Ebene ausbiegbar ausgebildet. Zwischen dem Tragkörper und der Schweißleiste ist eine Vorspanneinrichtung vorhanden, die mit ihrer Vorspannkraft Verschiebebewegungen der Schweißleiste entgegenwirkt, die in der Verschiebeebene längs der durch die Halter gebildeten Führungen in Richtung auf den Tragkörper hin verlaufen.

Aus der DE 43 10 916 ist eine Vorrichtung zum Thermo- oder Hochfrequenzschweißen und zum Stanzen von Tafeln bekannt.

Aus der EP 0 634 328 A1 ist eine Vorrichtung zur Heißversiegelung von thermoplastischem Material bekannt, welche einen Siegelbügel mit einem Bügelkörper und einem thermischen Streifen umfasst. Der Bügelkörper ist einstückig hergestellt und weist eine Rille auf, in welcher der thermische Streifen mechanisch verankert ist. Eine elektrisch isolierende Schicht ist zwischen dem Bügelkörper und der Rille angeordnet.

Der Erfindung liegt die Aufgabe zugrunde, ein Heißsiegelwerkzeug bereitzustellen, welches sich auf einfache Weise herstellen lässt und welches gute Wärmeeigenschaften aufweist.

Diese Aufgabe wird erfindungsgemäß dadurch gelöst, dass eine Wärmeübertragungseinrichtung zur Kontaktierung von Siegelobjekten vorgesehen ist, wobei die Wärmeübertragungseinrichtung aus einem metallischen Material hergestellt ist, und ein Träger vorgesehen ist, an welchem die Wärmeübertragungseinrichtung gehalten ist, wobei die Wärmeübertragungseinrichtung über Stegelemente an dem Träger fixiert ist und die Stegelemente einstückig an der Wärmeübertragungseinrichtung angeordnet sind.

Eine Wärmeübertragungseinrichtung aus einem metallischen Material lässt sich auf einfache Weise herstellen mit grundsätzlich beliebiger Formgebung. Es lassen sich Stegelemente insbesondere einstückig ausbilden.

Über die Stegelemente lässt sich die Wärmeübertragungseinrichtung mit minimalem thermischem Kontakt an dem Träger halten. Insbesondere lässt sich die Wärmeübergangsfläche von einem Wärmekörper der Wärmeübertragungseinrichtung zu dem Träger hin minimieren.

Die Wärmeübertragungseinrichtung lässt sich insbesondere lösbar an dem Träger fixieren, so dass eine schnelle Austauschbarkeit gewährleistet ist. Auch eine schnelle Montage während des Herstellungsprozesses ist ermöglicht.

Über die Stegelemente lässt sich ein Wärmekörper der Wärmeübertragungseinrichtung in einem Abstand zu dem Träger halten. Dadurch lassen sich Kältebrücken vermeiden. Es ist dadurch auch möglich, den Wärmekörper dicker auszugestalten, so dass er beispielsweise mechanisch stabiler ist.

Wenn die Stegelemente einstückig an der Wärmeübertragungseinrichtung angeordnet sind, lässt sich die Wärmeübertragungseinrichtung auf einfache Weise herstellen. Ferner lässt sich aufgrund der Eigenelastizität des metallischen Materials der Wärmeübertragungseinrichtung auf einfache Weise eine Fixierung und insbesondere Klemmfixierung der Wärmeübertragungseinrichtung an dem Träger erreichen.

Insbesondere ist eine Mehrzahl von Stegelementen vorgesehen. Dadurch lässt sich über die ganze Länge des Trägers bzw. der Wärmeübertragungseinrichtung (wobei die Längenrichtung nicht unbedingt eine einzige Linearrichtung sein muss) eine stabile Fixierung der Wärmeübertragungseinrichtung an dem Träger erreichen.

Günstigerweise sind die Stegelemente beabstandet zueinander angeordnet. Dadurch ist die Wärmeübergangsfläche von einem Wärmekörper zu dem Träger hin minimierbar, wobei eine sichere Fixierung erreichbar ist.

In diesem Zusammenhang ist es besonders günstig, wenn die Stegelemente in einer Abstandsrichtung benachbarter Stegelemente eine Breite aufweisen, die kleiner ist als der Abstand benachbarter Stegelemente. Insbesondere ist der Abstand zwischen benachbarten Stegelementen mindestens dreifach und vorzugsweise mindestens fünffach größer als die Breite eines Stegelements. Dadurch lässt sich der Wärmeübergang von der Wärmeübertragungseinrichtung zu dem Träger (welcher aus einem Material mit geringer Wärmeleitfähigkeit hergestellt ist) gering halten.

Ganz besonders vorteilhaft ist es, wenn die Wärmeübertragungseinrichtung über die Stegelemente auf den Träger aufgeklippt ist. Durch das Aufklippen lässt sich die Wärmeübertragungseinrichtung über Federklemmwirkung an dem Träger halten. Dadurch ergibt sich eine schnelle Montierbarkeit der Wärmeübertragungseinrichtung an dem Träger und damit eine einfache Herstellbarkeit bzw. einfache Austauschbarkeit. Die Wärmeübertragungseinrichtung kann von dem Träger gelöst werden, so dass ein einfacher Austausch bei Verschleiß möglich ist.

Günstig ist es, wenn Stegelemente auf gegenüberliegenden Seiten der Wärmeübertragungseinrichtung angeordnet sind. Dadurch lässt sich eine sichere Fixierung an dem Träger bewirken.

Insbesondere stehen die Stegelemente von einem Wärmekörper ab. An oder in dem Wärmekörper ist insbesondere eine Heizeinrichtung zur Wärmezufuhr zur Wärmeübertragungseinrichtung angeordnet. Durch die Stegelemente lässt sich eine Beabstandung des Wärmekörpers von dem Träger erreichen, um die Wärmeübergangsfläche, über die ein Wärmestrom von dem Wärmekörper zu dem Träger fließen kann, zu minimieren.

Insbesondere stehen die Stegelemente quer zu einer Kontaktfläche der Wärmeübertragungseinrichtung ab. Dadurch lässt sich auf einfache Weise eine Beabstandung zwischen einem Wärmekörper und dem Träger erreichen.

Es kann vorgesehen sein, dass der Träger einen oder mehrere zurückgesetzte Bereiche zur mindestens teilweisen Anlage von Stegelementen aufweist. Dadurch lässt sich insbesondere eine Klemmverbindung zwischen der Wärmeübertragungseinrichtung und dem Träger erreichen. Weiterhin wird die Montage der Wärmeübertragungseinrichtung vereinfacht, da durch einen zurückgesetzten Bereich der Abstand zwischen dem Wärmekörper und dem Träger vordefiniert ist.

Günstig ist es, wenn ein Stegelement einen Stegbereich aufweist, mittels welchem er von einem Wärmekörper der Wärmeübertragungseinrichtung absteht. Der Stegbereich lässt sich mit einem solchen kleinen Querschnitt ausbilden, dass der Wärmestrom von dem Wärmekörper zu dem Träger minimiert ist.

Es kann vorgesehen sein, dass an dem Stegbereich ein Fußbereich angeordnet ist, über welchen die Wärmeübertragungseinrichtung an dem Träger fixiert ist. Über den Fußbereichkann eine sichere Fixierung der Wärmeübertragungseinrichtung an dem Träger erreicht werden.

Günstigerweise ist der Fußbereich bezüglich des Stegbereichs verbreitert, um eine vergrößerte Anlagefläche zur Fixierung bereitzustellen.

Es ist dann günstig, wenn der Fußbereich breiter als der Stegbereich bezogen auf eine Abstandsrichtung zwischen benachbarten Stegelementen an der gleichen Seite der Wärmeübertragungseinrichtung ist. Dadurch wird eine größere Anlagefläche bereitgestellt.

Ganz besonders vorteilhaft ist es, wenn die Summe aller Breiten der Stegbereiche erheblich kleiner ist als die Umfangslänge des Wärmekörpers. Dadurch ist die Wärmeübergangsfläche, durch die Wärmeströme von dem Wärmekörper zu dem Träger hin abfließen können, minimiert. Insbesondere ist die Umfangslänge mindestens dreifach oder vorzugsweise mindestens fünffach größer als die Summe aller Breiten der Stegbereiche.

Günstigerweise sind Stegelemente an gegenüberliegenden Rändern des Wärmekörpers angeordnet. Dadurch lässt sich beispielsweise die Wärmeübertragungseinrichtung auf einfache Weise herstellen.

Günstig ist es, wenn der Träger aus einem Kunststoffmaterial hergestellt ist, welches insbesondere ein Wärmeisolator ist.

Günstig ist es, wenn der Träger an einer einem Wärmekörper der Wärmeübertragungseinrichtung zugewandten Seite abgeschrägte Kantenbereiche aufweist. Dadurch erhöht sich die Breite des Wärmekörpers von der Kontaktfläche weg zu dem Träger zu. Nach Aufsetzen von Stegelementen auf die abgeschrägten Bereiche und Ausübung eines Drucks auf die Wärmeübertragungseinrichtung lässt sich auf die Stegelemente eine Querkraft ausüben, um diese in einen zurückgesetzten Bereich an dem Träger einschieben zu können. Aufgrund einer elastischen Ausbildung der Stegelemente wird der Wärmekörper an dem Träger klemmend gehalten; die Wärmeübertragungseinrichtung lässt sich so auf einfache Weise auf den Träger aufklippen.

Günstigerweise weist der Träger einen oder mehrere Stufenbereiche an gegenüberliegenden Seiten für die Anlage von Stegelementen auf. Durch einen solchen Stufenbereich ist ein zurückgesetzter Bereich definiert, an dem ein Stegelement mindestens teilweise an dem Träger anliegen kann, um dieses per Federklemmung an dem Träger zu fixieren. Ferner wird eine Sperrfläche bereitgestellt, über die die Höhe eines Wärmekörpers der Wärmeübertragungseinrichtung bezüglich des Trägers definiert ist. Dies wiederum erleichtert die Herstellung.

Vorzugsweise ist der Wärmeübertragungseinrichtung eine Heizeinrichtung zugeordnet. Es handelt sich insbesondere um eine Widerstandsheizung. Dadurch lässt sich eine Kontaktfläche flächig beheizen.

Beispielsweise weist die Wärmeübertragungseinrichtung eine oder mehrere Heizwicklungen auf. Diese können in einen Wärmekörper beispielsweise durch Aufvulkanisieren integriert sein oder an einem Wärmekörper angeordnet sein. Dadurch lässt sich der thermische Widerstand zwischen der Heizeinrichtung und dem zu beheizenden Körper klein halten.

Zur Erzielung eines guten Siegelergebnisses ist es günstig, wenn die Wärmeübertragungsfläche eine im wesentlichen ebene Kontaktfläche aufweist.

Ganz besonders günstig ist es, wenn eine Kontaktfläche der Wärmeübertragungseinrichtung mit einer Antihaft-Beschichtung versehen ist. Beispielsweise handelt es sich um eine PTFE-Beschichtung. Dadurch lässt sich die Lebensdauer bezüglich Verschmutzung erhöhen.

Beispielsweise ist die Wärmeübertragungseinrichtung mittels eines Metallblechs hergestellt. Beispielsweise wird eine Grundform aus einem Metallblech ausgestanzt und mit einer Heizeinrichtung versehen. Entsprechend lässt sich die Wärmeübertragungseinrichtung auf einfache Weise herstellen.

Ganz besonders vorteilhaft ist es, wenn ein Wärmekörper der Wärmeübertragungseinrichtung beabstandet zu einem Träger ist. Dadurch lassen sich Kältebrücken weitgehend vermeiden.

Günstig ist es, wenn eine Zwischenschicht zwischen einem Wärmekörper der Wärmeübertragungseinrichtung und dem Träger vorgesehen ist. Durch die Zwischenschicht lässt sich ein Zwischenraum zwischen der Wärmeübertragungseinrichtung und dem Träger mindestens teilweise so ausfüllen, dass die mechanische Stabilität des Heißsiegelwerkzeugs gegenüber Anpressdrücken erhöht wird. Insbesondere lässt sich ein Durchbiegen des Wärmekörpers weitgehend verhindern.

Insbesondere ist die Zwischenschicht wärmeisolierend ausgebildet. Beispielsweise ist die Zwischenschicht über ein Schaummaterial wie poröses Silikon mit entsprechenden Wärmeisolierungseigenschaften gebildet.

Die nachfolgende Beschreibung bevorzugter Ausführungsformen dient im Zusammenhang mit der Zeichnung der näheren Erläuterung der Erfindung.
Es zeigen:
- Figur 1: eine Draufsicht auf ein Ausführungsbeispiel eines Heißsiegelwerkzeugs;
- Figur 2: eine Schnittansicht längs der Linie 2-2 gemäß Figur 1; und
- Figur 3: eine seitliche Teilansicht des Heißsiegelwerkzeugs gemäß Figur 1 in der Richtung A.

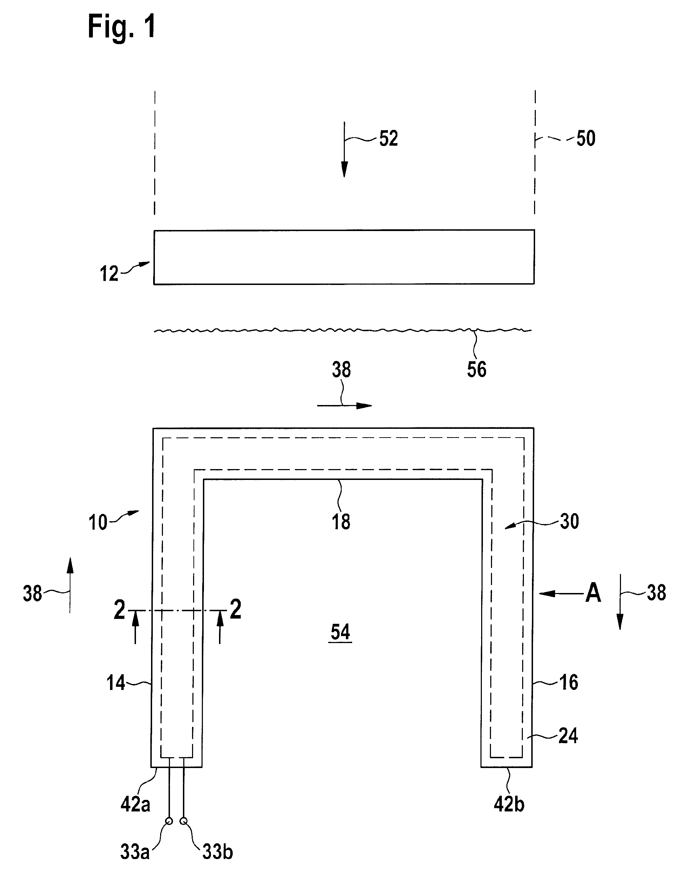

Ein Ausführungsbeispiel eines erfindungsgemäßen Heißsiegelwerkzeugs, welches in Figur 1 gezeigt und dort mit 10 bezeichnet ist, ist beispielsweise in einer Verpackungsmaschine angeordnet. Die Verpackungsmaschine kann beispielsweise ein weiteres Heißsiegelwerkzeug 12 umfassen.

Das Heißsiegelwerkzeug 10 weist in dem in Figur 1 gezeigten Ausführungsbeispiel eine U-förmige Gestalt auf mit einem ersten Schenkel 14, einem parallel beabstandeten zweiten Schenkel 16 und einem Brückenelement 18 zwischen dem ersten Schenkel und dem zweiten Schenkel, wobei das Brückenelement 18 im wesentlichen senkrecht zu dem ersten Schenkel 14 und dem zweiten Schenkel 16 steht.

Das Heißsiegelwerkzeug 12 ist beispielsweise I-förmig ausgebildet.

Ein erfindungsgemäße Heißsiegelwerkzeug kann in beliebigen Formen hergestellt werden.

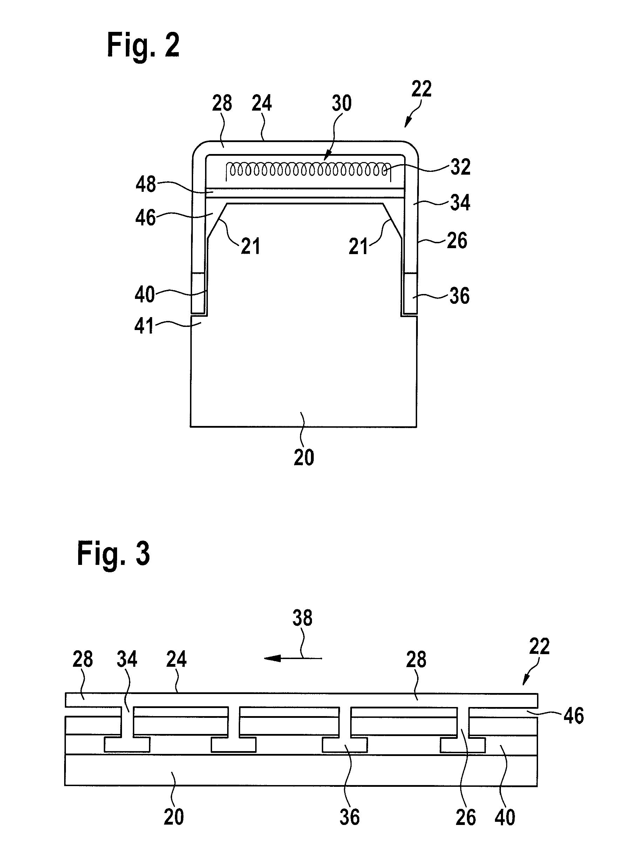

Das Heißsiegelwerkzeug 10 umfasst einen Träger 20 (Figuren 2 und 3), welcher vorzugsweise aus einem wärmeisolierenden Kunststoffmaterial hergestellt ist. Ein beispielhaftes Material ist DELRIN ("DELRIN" ist eine eingetragene Marke der E.I. Du Pont de Nemours and Co., Wilmington, USA). Der Träger 20 weist beispielsweise einen rechteckigen Querschnitt mit abgeschrägten Kantenbereichen 21 auf. Die Gestalt des Heißsiegelwerkzeugs 10 bestimmt den Längsverlauf des Trägers 20.

Ist das Heißsiegelwerkzeug 10 beispielsweise U-förmig ausgestaltet, so ist der Träger 20 entsprechend U-förmig ausgestaltet mit einem ersten Schenkel, einem zweiten Schenkel und einem Brückenelement zur Verbindung der beiden Schenkel.

Der Träger 20 hält eine Wärmeübertragungseinrichtung 22. Diese Wärmeübertragungseinrichtung 22 hat eine im wesentlichen ebene Kontaktfläche 24, welche zur Kontaktierung von Siegelobjekten zur Wärmeübertragung auf diese dient. Beispielsweise können mittels Kontaktierung über die Kontaktfläche 24 Folien oder Folienteile miteinander verschweißt werden.

Die Wärmeübertragungseinrichtung 22 ist aus einem metallischen Material mit entsprechend hoher Wärmeleitfähigkeit hergestellt. Vorzugsweise ist eine Antihaft-Beschichtung wie eine PTFE-Beschichtung an der Kontaktfläche 24 angeordnet.

Die Wärmeübertragungseinrichtung 22 umfasst eine Mehrzahl von Stegelementen 26, über welche die Wärmeübertragungseinrichtung 22 an dem Träger 20 gehalten und insbesondere auf diesen geklippt ist, das heißt über Federklemmwirkung an dem Träger 20 gehalten ist.

Die Wärmeübertragungseinrichtung 22 umfasst einen Wärmekörper 28, an welchem die Kontaktfläche 24 ausgebildet ist. In den Wärmekörper 28 ist eine Heizeinrichtung 30 beispielsweise durch Aufvulkanisieren integriert. Es handelt sich dabei insbesondere um eine Widerstandsheizung mit einer oder mehreren Heizwicklungen 32 und elektrischen Anschlüssen 33a, 33b (Figur 2). Über die Heizeinrichtung 30 lässt sich der Wärmekörper 28 aufheizen und über die Kontaktfläche 24 lässt sich Wärme in ein Siegelobjekt einkoppeln.

Über die Stegelemente 26 ist der Wärmekörper 28 beabstandet zu dem Träger 20 fixiert. Dazu ragen die Stegelemente 26 über einen Stegbereich 34 über den Wärmekörper 28 hinaus, das heißt die Stegelemente 26 stehen über ihre jeweiligen Stegbereiche 34 von dem Wärmekörper 28 in Richtung des Trägers 20 ab.

An einem Stegbereich 34 sitzt ein Fußbereich 36.

Es kann vorgesehen sein, dass ein Fußbereich 36 in einer Richtung 38, welche der Abstandsrichtung zwischen benachbarten Stegelementen 26 an einer Seite der Wärmeübertragungseinrichtung 22 entspricht (Figur 3) eine größere Breite aufweist als der Stegbereich 34, an welchem er sitzt. Dadurch lässt sich die Klemmfläche vergrößern.

Vorzugsweise weist ein Stegelement 26 über seine ganze Länge eine einheitliche Dicke auf.

Der Träger 20 weist einen oder mehrere zurückgesetzte Bereiche 40 auf, an welchen die Fußbereiche 36 anliegen. Mindestens teilweise können auch die Stegbereiche 34 anliegen.

Der zurückgesetzte Bereich bzw. die zurückgesetzten Bereiche 40 können an einem Stufenbereich 41 gebildet sein, durch welchen eine Stufe bereitgestellt ist, welche beispielsweise parallel zu einer Seite des Trägers 20 orientiert ist, welche dem Wärmekörper 28 zugewandt ist. Dadurch wird eine Sperrfläche bezüglich einer weiteren Verschiebung der Wärmeübertragungseinrichtung 22 zu dem Träger 20 hin bereitgestellt und dadurch eine Abstandspositionierung des Wärmekörpers 28 von dem Träger 20 gesorgt.

(Es ist dabei möglich, dass an Stirnseiten 42a, 42b kein zurückgesetzter Bereich vorliegt und in diesem Bereich die Wärmeübertragungseinrichtung 22 auch keine Stegelemente 26 aufweist.)

Die Stegelemente 26 sind einstückig an dem Wärmekörper 28 angeordnet. Die Wärmeübertragungseinrichtung 22 ist dadurch einstückig ausgebildet. Sie ist beispielsweise mit Hilfe eines Metallblechs hergestellt, an welchem die Heizeinrichtung 30 positioniert wird. Beispielsweise werden die Stegelemente 26 ausgestanzt.

Es sind Stegelemente 26 auf gegenüberliegenden Seiten der Wärmeübertragungseinrichtung 22 angeordnet. Die Stegelemente 26 sitzen dabei bevorzugt am Rand des Wärmekörpers 28, so dass sie die Querabmessungen der Wärmeübertragungseinrichtung 22 definieren.

Beispielsweise sind Stegelemente-Paare gebildet, welche zwei Stegelemente umfassen, die in der Querrichtung senkrecht zur Richtung 38 gegenüberliegend angeordnet sind.

Die Stegelemente 26 bilden (Feder-)Schenkelelemente, mit denen sich die Wärmeübertragungseinrichtung 22 insbesondere klemmend an dem Träger 20 halten lässt.

Die Summe der Breite aller Stegbereiche 34 in der Richtung 38 ist kleiner als die Umfangslänge des Wärmekörpers 28 in der Richtung 38. Sie ist insbesondere erheblich kleiner; die Umfangslänge des Wärmekörpers 28 in der Richtung 38 ist mindestens dreifach und vorzugsweise mindestens fünffach größer als die Summe aller Breiten der Stegbereiche 34 in dieser Richtung 38. Dadurch ist die Fläche, durch die Wärme vom Wärmekörper 28 in Richtung des Trägers 20 über die Stegelemente 26 geleitet werden kann, minimiert.

Ferner ist die Breite der Stegelemente senkrecht zur Richtung 38 im Vergleich zu der Querbreite des Wärmekörpers 28 erheblich kleiner.

Zwischen dem Wärmekörper 28 und dem Träger 20 ist ein Zwischenraum 46 gebildet. In diesem Zwischenraum 46 ist eine Zwischenschicht 48 angeordnet, welche der Erhöhung der mechanischen Stabilität für die Fixierung der Wärmeübertragungseinrichtung 22 an dem Träger 20 dient. Es lässt sich durch die Zwischenschicht 48 erreichen, dass bei einem Anpressdruck auf den Wärmekörper 28 dieser in Richtung des Trägers 20 nicht zu stark durchbiegt.

Die Zwischenschicht 48 ist aus einem wärmeisolierenden Material hergestellt, um die Wärmeabfuhr von dem Wärmekörper 28 zu dem Träger 20 möglichst gering zu halten.

Beispielsweise ist die Zwischenschicht 48 aus porösem Silicium hergestellt. Diese Zwischenschicht 48 weist beispielsweise eine Härte auf, die in der Größenordnung einer Shore-Härte 3 bis 5 liegt.

Es ist dabei grundsätzlich möglich, dass die Zwischenschicht 48 direkt an dem Wärmekörper 28 gebildet ist. Sie kann entsprechend auch direkt an dem Träger 20 gebildet sein.

Das Heißsiegelwerkzeug 12 kann grundsätzlich ausgebildet sein wie das Heißsiegelwerkzeug 10, das heißt es kann eine Wärmeübertragungseinrichtung umfassen, welche auf einen Träger aufgeklippt ist.

Bei der in Figur 1 gezeigten Anordnung dient beispielsweise das Heißsiegelwerkzeug 12 dazu, zwei Folienbahnen (in Figur 1 angedeutet mit dem Bezugszeichen 50) in einem Anfangsbereich zu verschweißen, wobei zwischen den beiden Folienbahnen 50 Verpackungsgut liegt. Nach diesem Heißsiegelvorgang (durchgeführt über das Heißsiegelwerkzeug) werden die beiden Folienbahnen mit dem Verpackungsgut in der Richtung 52 gezogen und dabei wird das Verpackungsgut in einem Zwischenraum 54 positioniert, welcher durch die Schenkel 14 und 16 begrenzt ist. Anschließend wird ein Heißsiegelvorgang durch das Heißsiegelwerkzeug 10 durchgeführt und dabei das Verpackungsgut rundum verschlossen. Anschließend lässt sich an einer Abreißkante 56 eine Trennung von den Rest-Folienbahnen durchführen, um eine einzeln handhabbare Verpackung zu erhalten.

Durch die erfindungsgemäße Lösung, bei der die Wärmeübertragungseinrichtung 22 über Stegelemente 26 an dem Träger 20 gehalten ist, lässt sich der Wärmekörper 28 beabstandet zu dem Träger 20 an diesem halten. Es ist dabei eine lösbare Fixierung erreicht, so dass die Herstellung vereinfacht ist. Auch eine Reparatur bzw. ein Austausch der Wärmeübertragungseinrichtung 22 lässt sich auf einfache Weise durchführen. (Die Wärmeübertragungseinrichtung 22 ist ein Verschleißteil, da diese über ihre Kontaktfläche 24 Siegelgut kontaktiert; der Träger 20 ist dagegen in der Regel nur sehr geringem Verschleiß unterworfen.)

Die Wärmeübertragungseinrichtung 22 lässt sich aus einem metallischen Material mit entsprechender Elastizität herstellen. Dadurch ist die Herstellbarkeit vereinfacht und es lassen sich beispielsweise auch beliebige Formen für die Wärmeübertragungseinrichtung 22 und damit für das Heißsiegelwerkzeug 10 realisieren.

Es lassen sich Kältebrücken zwischen der Wärmeübertragungseinrichtung 22 und dem Träger 20 vermeiden, die sonst zu einer Verschlechterung des Siegelergebnisses führen können.

Durch die metallische Wärmeübertragungseinrichtung 22 lässt sich die Heizeinrichtung 30 auf einfache Weise an dieser anordnen, um so wiederum eine effektive Wärmezufuhr zu der Wärmeübertragungseinrichtung 22 zu erhalten.

Aufgrund der Abstandshalterung des Wärmekörpers 28 zu dem Träger 20 über die Stegelemente 26 ist es möglich, den Wärmekörper 28 mit größerer Dicke auszugestalten und insbesondere ein dickeres Blech zu verwenden. Dadurch wiederum wird die mechanische Stabilität erhöht.

## Patentansprüche

1. Heißsiegelwerkzeug, umfassend eine Wärmeübertragungseinrichtung (22) zur Kontaktierung von Siegelobjekten (50), wobei die Wärmeübertragungseinrichtung (22) aus einem metallischen Material hergestellt ist, und einen Träger (20), an welchem die Wärmeübertragungseinrichtung (22) gehalten ist, wobei die Wärmeübertragungseinrichtung (22) über Stegelemente (26) an dem Träger (20) fixiert ist und die Stegelemente (26) einstückig an der Wärmeübertragungseinrichtung (22) angeordnet sind.

2. Heißsiegelwerkzeug nach Anspruch 1, **dadurch gekennzeichnet, dass** eine Mehrzahl von Stegelementen (26) vorgesehen ist.

3. Heißsiegelwerkzeug nach einem der vorangehenden Ansprüche, **dadurch gekennzeichnet, dass** die Stegelemente (26) beabstandet zueinander sind.

4. Heißsiegelwerkzeug nach Anspruch 3, **dadurch gekennzeichnet, dass** die Stegelemente (26) in einer Abstandsrichtung (38) benachbarter Stege (26) eine Breite aufweisen, die kleiner ist als der Abstand benachbarter Stegelemente (26).

5. Heißsiegelwerkzeug nach einem der vorangehenden Ansprüche, **dadurch gekennzeichnet, dass** die Wärmeübertragungseinrichtung (22) über die Stegelemente (26) auf den Träger (20) aufgeklippt ist.

6. Heißsiegelwerkzeug nach einem der vorangehenden Ansprüche, **dadurch gekennzeichnet, dass** Stegelemente (26) an gegenüberliegenden Seiten der Wärmeübertragungseinrichtung (22) angeordnet sind.

7. Heißsiegelwerkzeug nach einem der vorangehenden Ansprüche, **dadurch gekennzeichnet, dass** die Stegelemente (26) von einem Wärmekörper (28) der Wärmeübertragungseinrichtung (22) abstehen.

8. Heißsiegelwerkzeug nach einem der vorangehenden Ansprüche, **dadurch gekennzeichnet, dass** die Stegelemente (26) quer zu einer Kontaktfläche (24) der Wärmeübertragungseinrichtung (22) abstehen.

9. Heißsiegelwerkzeug nach einem der vorangehenden Ansprüche, **dadurch gekennzeichnet, dass** der Träger (20) einen oder mehrere zurückgesetzte Bereiche (40) zur mindestens teilweisen Anlage von Stegelementen (26) aufweist.

10. Heißsiegelwerkzeug nach einem der vorangehenden Ansprüche, **dadurch gekennzeichnet, dass** ein Stegelement (26) einen Stegbereich (34) aufweist, mittels welchem es von einem Wärmekörper (28) der Wärmeübertragungseinrichtung (22) absteht.

11. Heißsiegelwerkzeug nach Anspruch 10, **dadurch gekennzeichnet, dass** an dem Stegbereich (34) ein Fußbereich (36) angeordnet ist, über welchen die Wärmeübertragungseinrichtung (22) an dem Träger (20) fixiert ist.

12. Heißsiegelwerkzeug nach Anspruch 11, **dadurch gekennzeichnet, dass** der Fußbereich (36) bezüglich des Stegbereichs (34) verbreitert ist.

13. Heißsiegelwerkzeug nach Anspruch 12, **dadurch gekennzeichnet, dass** der Fußbereich (36) breiter als der Stegbereich (34) bezogen auf eine Abstandsrichtung (38) zwischen benachbarten Stegelementen (26) an der gleichen Seite der Wärmeübertragungseinrichtung (22) ist.

14. Heißsiegelwerkzeug nach einem der Ansprüche 10 bis 13, **dadurch gekennzeichnet, dass** die Summe aller Breiten der Stegbereiche (34) erheblich kleiner ist als die Umfangslänge des Wärmekörpers (28).

15. Heißsiegelwerkzeug nach einem der Ansprüche 10 bis 14, **dadurch gekennzeichnet, dass** die Stegelemente (26) an gegenüberliegenden Rändern des Wärmekörpers (28) angeordnet sind.

16. Heißsiegelwerkzeug nach einem der vorangehenden Ansprüche, **dadurch gekennzeichnet, dass** der Träger (20) aus einem Kunststoffmaterial hergestellt ist.

17. Heißsiegelwerkzeug nach einem der vorangehenden Ansprüche, **dadurch gekennzeichnet, dass** der Träger (20) an einer einem Wärmekörper (28) der Wärmeübertragungseinrichtung (22) zugewandten Seite abgeschrägte Kantenbereiche (21) aufweist.

18. Heißsiegelwerkzeug nach einem der vorangehenden Ansprüche, **dadurch gekennzeichnet, dass** der Träger (20) einen oder mehrere Stufenbereiche (41) an gegenüberliegenden Seiten für die Anlage von Stegelementen (26) aufweist.

19. Heißsiegelwerkzeug nach einem der vorangehenden Ansprüche, **dadurch gekennzeichnet, dass** der Wärmeübertragungseinrichtung (22) eine Heizeinrichtung (30) zugeordnet ist.

20. Heißsiegelwerkzeug nach einem der vorangehenden Ansprüche, **dadurch gekennzeichnet, dass** die Wärmeübertragungseinrichtung (22) eine oder mehrere Heizwicklungen (32) aufweist.

21. Heißsiegelwerkzeug nach einem der vorangehenden Ansprüche, **dadurch gekennzeichnet, dass** die Wärmeübertragungseinrichtung (22) eine im wesentlichen ebene Kontaktfläche (24) aufweist.

22. Heißsiegelwerkzeug nach einem der vorangehenden Ansprüche, **dadurch gekennzeichnet, dass** eine Kontaktfläche (24) der Wärmeübertragungseinrichtung (22) mit einer Antihaft-Beschichtung versehen ist.

23. Heißsiegelwerkzeug nach einem der vorangehenden Ansprüche, **dadurch gekennzeichnet, dass** die Wärmeübertragungseinrichtung (22) mittels eines Metallblechs hergestellt ist.

24. Heißsiegelwerkzeug nach einem der vorangehenden Ansprüche, **dadurch gekennzeichnet, dass** ein Wärmekörper (28) der Wärmeübertragungseinrichtung (22) beabstandet zu dem Träger (20) ist.

25. Heißsiegelwerkzeug nach einem der vorangehenden Ansprüche, **dadurch gekennzeichnet, dass** eine Zwischenschicht (48) zwischen einem Wärmekörper (28) der Wärmeübertragungseinrichtung (22) und dem Träger (20) vorgesehen ist.

26. Heißsiegelwerkzeug nach Anspruch 25, **dadurch gekennzeichnet, dass** die Zwischenschicht (48) wärmeisolierend ausgebildet ist.
